(19) Europäisches Patentamt
European Patent Office
Office européen des brevets

(11) **EP 3 813 385 A1**

(12) **EUROPEAN PATENT APPLICATION**
published in accordance with Art. 153(4) EPC

(43) Date of publication:
**28.04.2021 Bulletin 2021/17**

(51) Int Cl.:
***H04R 17/00*** (2006.01)

(21) Application number: **19826265.1**

(86) International application number:
**PCT/JP2019/023823**

(22) Date of filing: **17.06.2019**

(87) International publication number:
**WO 2020/004097 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2018 JP 2018119903**

(71) Applicant: **Panasonic Intellectual Property Management Co., Ltd.**
**Osaka-shi, Osaka 540-6207 (JP)**

(72) Inventors:
• **HASHIDA, Masamichi**
**Osaka-shi, Osaka 540-6207 (JP)**

• **MASUDA, Tomoki**
**Osaka-shi, Osaka 540-6207 (JP)**
• **NOBUNAGA, Masaki**
**Osaka-shi, Osaka 540-6207 (JP)**
• **NAGAHARA, Hidetomo**
**Osaka-shi, Osaka 540-6207 (JP)**
• **ISHIZAKI, Yudai**
**Osaka-shi, Osaka 540-6207 (JP)**

(74) Representative: **SSM Sandmair**
**Patentanwälte Rechtsanwalt**
**Partnerschaft mbB**
**Joseph-Wild-Straße 20**
**81829 München (DE)**

(54) **ULTRASONIC SENSOR**

(57) An ultrasonic sensor includes metal member (4) having flat plate (4a), piezoelectric element (2) bonded to first surface (4b) of flat plate (4a), first acoustic matching layer (5) adhered to second surface (4c) of flat plate (4a), and adhesive (3) that adheres first acoustic matching layer (5) to flat plate (4a). First acoustic matching layer (5) of the ultrasonic sensor has opening (8a) on a surface adhered to flat plate (4a) and void (8) that communicates with opening (8a), in which adhesive (3) is filled in void (8), adhesive (3) solidifies in void (8), and thus an anchor effect can be obtained.

FIG. 1

EP 3 813 385 A1

**Description**

TECHNICAL FIELD

The present invention mainly relates to a sensor that transmits and receives ultrasonic waves.

BACKGROUND ART

In general, when a difference in acoustic impedance between different substances (a product of density and an acoustic velocity of each substance) is small, ultrasonic waves are transmitted through an interface of the different substances. When the difference in the acoustic impedance is large, the ultrasonic waves reflect at the interface of the different substances. Thus, energy transfer efficiency increases as the difference in the acoustic impedance decreases.
However, piezoelectric elements are generally configured by ceramics (having high density and a high acoustic velocity), and the density and acoustic velocity of gas such as air to which the ultrasonic waves are transmitted are significantly smaller than those of ceramics. As a result, the energy transfer efficiency from the piezoelectric element to the gas is significantly low. In order to solve this problem, measures have been taken to increase the energy transfer efficiency by interposing an acoustic matching layer having a smaller acoustic impedance than the piezoelectric element and a larger acoustic impedance than the gas between the piezoelectric element and the gas.
From a viewpoint of the acoustic impedance, the ultrasonic waves are most efficiently transmitted from the piezoelectric element to the gas through the acoustic matching layer, when

$$Z2^2 = Z1 \times Z3 \quad (1)$$

is satisfied,
where

   Z1 is an acoustic impedance of a piezoelectric element,
   Z2 is an acoustic impedance of an acoustic matching layer, and
   Z3 is an acoustic impedance of an object to which ultrasonic waves are transmitted (gas).

Furthermore, in order to propagate the ultrasonic waves generated by the piezoelectric element to the gas with high efficiency, it is necessary to keep an energy loss of the ultrasonic waves propagating through the acoustic matching layer low. A major factor of energy loss of the ultrasonic waves propagating through the acoustic matching layer is that the ultrasonic waves propagating through the acoustic matching layer deform the acoustic matching layer, and thus the energy of the ultrasonic waves is dissipated as heat. Therefore, a substance to be used as the acoustic matching layer needs to be hardly deformed (have a large elastic modulus).
As can be seen from equation (1), acoustic impedance Z2 of the acoustic matching layer needs to be significantly smaller than an acoustic impedance of a solid substance to approach acoustic impedance Z3 of gas. However, a substance having a low acoustic impedance is a substance having a low acoustic velocity and a low density, and in many cases, is generally easily deformed. For these reasons, few substances satisfy properties required for the acoustic matching layer.
That is, because the acoustic impedance of the piezoelectric element including a solid substance and the acoustic impedance of gas are different by about 5 digits, the acoustic impedance of the acoustic matching layer needs to be reduced by about 3 digits of the acoustic impedance of the piezoelectric element in order to satisfy equation (1). Thus, few substances satisfy the characteristics of the acoustic matching layer.
Consequently, by using two acoustic matching layers, equation (1) is satisfied for the acoustic impedance of the piezoelectric element and a first layer (first acoustic matching layer), and the acoustic impedance of the first layer and the acoustic impedance of a second layer (second acoustic matching layer (object to which the ultrasonic waves are transmitted)), and the transmission efficiency is highest when equation (1) is satisfied between the acoustic impedance of the second layer and gas. By using these facts, attempts have been made to transmit ultrasonic waves with sufficient efficiency.
Here, in order to efficiently propagate the ultrasonic waves to the second acoustic matching layer, the first acoustic matching layer is desirably a hard material that reduces energy loss due to deformation (having a large elastic modulus), and in particular, a hard resin such as poly ether ether ketone (PEEK).
However, a general hard resin, which is difficult to bond, has a possibility of causing a defect in bonding due to a different thermal expansion coefficient from the piezoelectric element. Accordingly, measures have been taken to suppress bonding defects due to differences in thermal expansion coefficient (see, for example, PTL 1).

Furthermore, a through-hole in the acoustic matching layer is provided to prevent air bubbles from being mixed into a bonded surface during adhering (see, for example, PTL 2).

Citation List

Patent Literature

PTL 1: Japanese Patent No. 4701059
PTL 2: Japanese Patent No. 3488102

SUMMARY OF THE INVENTION

However, the piezoelectric element and the acoustic matching layer are bonded by a planar adhesive. Although a periphery of the piezoelectric element is held by a cushioning member, there is a possibility that a stress due to the thermal expansion coefficient may increase at a part away from the cushioning member, that is, near a center of the piezoelectric element. Furthermore, a candidate for a general acoustic matching layer having excellent properties is a resin having a large elastic modulus. Here, examples of the resin having a large elastic modulus include super engineering plastics such as PEEK, which also has poor adhesion.

For the above reasons, when a hard resin is used as the acoustic matching layer, there has been a possibility that the acoustic matching layer may be peeled off particularly near the center. Further, when the acoustic matching layer is provided with a through-hole having a diameter of a considerable degree or more, there has been a possibility that performance of the ultrasonic sensor may be reduced due to a reduction of ultrasonic waves.

An ultrasonic sensor of the present disclosure includes a piezoelectric element, a first acoustic matching layer adhered to the piezoelectric element, and an adhesive that adheres the first acoustic matching layer to the piezoelectric element, in which the first acoustic matching layer has a void having an opening on a surface adhered to the piezoelectric element, and the adhesive is filled in the void.

With this configuration, the ultrasonic sensor in the present disclosure can obtain an anchor effect and excellent durability by integrating the adhesive that solidifies in the void and the adhesive that adheres the piezoelectric element and the first acoustic matching layer.

The acoustic matching layer is adhered to the piezoelectric element or a metallic member bonded to the piezoelectric element to ensure electrical conductivity. Here, in general, the piezoelectric element includes ceramics such as lead zirconate titanate.

Thus, in the ultrasonic sensor of the present disclosure, the object to be adhered is a resin having poor adhesion and a ceramic or a metal that is relatively easily adhered. In the present disclosure, the acoustic matching layer is provided with a void that communicates with the opening, and the adhesive that is cured after filling the void is bonded to the acoustic matching layer by chemical bonding and a mechanical bonding, that is, the anchor effect. As a result, even if the acoustic matching layer has poor adhesion (bonding by the chemical bonding is weak), strong bonding to the piezoelectric element or the metallic member is secured. On the other hand, a facing surface of the adhesive is relatively easily bonded to ceramics or metals.

With this configuration, the piezoelectric element and the acoustic matching layer, which are firmly bonded, are not easily peeled off even when stress due to a difference in the thermal expansion coefficient occurs, and the ultrasonic sensor having excellent durability can be provided.

In the present disclosure, the acoustic matching layer has an opening that opens to a bonded surface and a void that communicates with the opening. Thus, the acoustic matching layer and the adhesive can obtain strong bonding by the anchor effect. Therefore, the acoustic matching layer, which includes a material having poor adhesion, can obtain strong bonding to the piezoelectric element. Hard resin having excellent properties as an acoustic matching layer, for example, super engineering plastic such as PEEK tends to have poor adhesion. However, the hard resin can be used as an acoustic matching layer by firmly bonding to the piezoelectric element by the anchor effect. As described above, an ultrasonic sensor having excellent characteristics and reliability can be provided.

BRIEF DESCRIPTION OF DRAWINGS

FIG. 1 is a schematic sectional view of an ultrasonic sensor according to a first exemplary embodiment.

FIG. 2 is a schematic sectional view of an ultrasonic sensor according to a second exemplary embodiment.

FIG. 3 is a top view of a first acoustic matching layer according to the second exemplary embodiment.

FIG. 4 is a schematic sectional view of an ultrasonic sensor according to a third exemplary embodiment.

FIG. 5 is a top view of a first acoustic matching layer according to the third exemplary embodiment.

FIG. 6A is a schematic sectional view of an ultrasonic sensor illustrating another example of the first exemplary embodiment.

FIG. 6B is a schematic sectional view of an ultrasonic sensor illustrating another example of the first exemplary embodiment.

FIG. 6C is a schematic sectional view of an ultrasonic sensor illustrating another example of the first exemplary embodiment.

DESCRIPTION OF EMBODIMENTS

Hereinafter, exemplary embodiments of the present invention will be described with reference to the drawings.

(First exemplary embodiment)

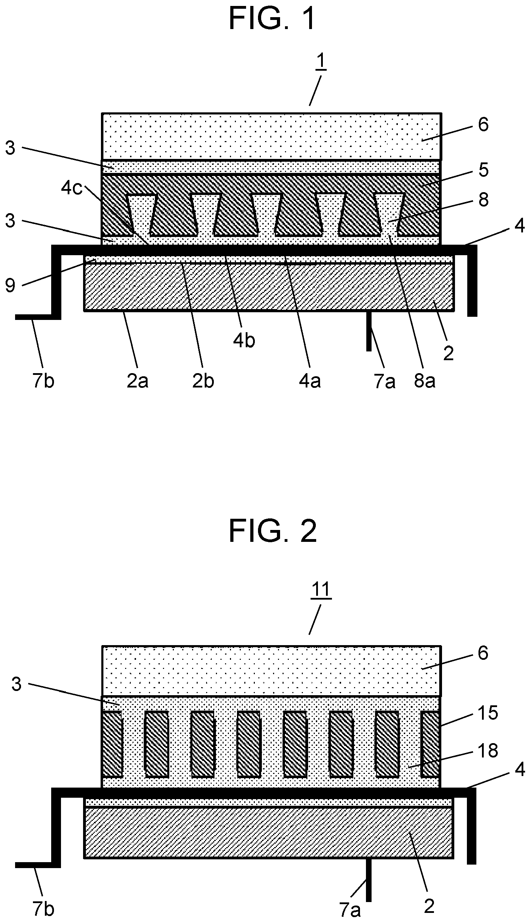

FIG. 1 is a schematic sectional view of an ultrasonic sensor according to a first exemplary embodiment.

In FIG. 1, ultrasonic sensor 1 includes piezoelectric element 2, adhesive 3, case 4, first acoustic matching layer 5, second acoustic matching layer 6, and electrodes 7a, 7b.

Case 4 is a bottomed tubular metal member. Piezoelectric element 2 is bonded to first surface 4b, which is an inner side of top surface 4a as a flat plate of case 4, with conductive adhesive 9. First acoustic matching layer 5 is bonded to second surface 4c, which is an outer side of top surface 4a of case 4, with adhesive 3 so as to face piezoelectric element 2. Furthermore, second acoustic matching layer 6 is bonded to a surface of first acoustic matching layer 5 not facing case 4 with adhesive 3. Further, electrode 7a is connected to electrode 2a of the piezoelectric element, and electrode 7b is connected to case 4. Electrode 2b of the piezoelectric element is bonded to case 4 with conductive adhesive 9, and thus piezoelectric element 2 oscillates and emits ultrasonic waves by applying a predetermined voltage between electrodes 7a, 7b. The emitted ultrasonic waves are eventually transmitted to a gas through case 4, first acoustic matching layer 5, and second acoustic matching layer 6. Case 4 has a bottomed cylindrical shape, but may have a flat plate shape.

Here, first acoustic matching layer 5 has a plurality of openings 8a on a surface facing case 4. Voids 8 having a wedge shape or truncated cone shape and having a smallest sectional area parallel to a surface bonded to case 4 near openings 8a are provided continuously to openings 8a.

In the present exemplary embodiment, liquid adhesive 3 is filled in voids 8 in advance, and the surface having openings 8a of first acoustic matching layer 5 and second surface 4c of case 4 are bonded directly or via adhesive 3 coated therebetween while adhesive 3 filled in voids 8 is wet. Then, adhesive 3 is solidified to bond case 4 and first acoustic matching layer 5.

A characteristic required for ultrasonic sensor 1 is to propagate the ultrasonic waves generated at piezoelectric element 2 to a gas with high efficiency. It is therefore necessary to bond piezoelectric element 2, case 4, first acoustic matching layer 5, and second acoustic matching layer 6 while ensuring sufficient strength and environmental durability.

In general, in a product manufactured by bonding different members, the members desirably have thermal expansion coefficients as similar as possible. This is to avoid a defect in an interface when a temperature change in the product in which members having different thermal expansion coefficients are bonded causes a shearing force due to a difference in the thermal expansion coefficients to act on the bonded interface.

From these viewpoints, the following is an overview of the bonding of piezoelectric element 2 and case 4, the bonding of case 4 and first acoustic matching layer 5, and the bonding of first acoustic matching layer 5 and second acoustic matching layer 6.

Piezoelectric element 2 generally includes ceramics, and case 4 generally includes metal. Ceramics and metal are both relatively easy to bond and relatively similar in thermal expansion coefficient, and thus piezoelectric element 2 and case 4 are relatively easy to bond.

First acoustic matching layer 5 includes a resin, and second acoustic matching layer 6 also often includes a resin. Thus, first acoustic matching layer 5 and second acoustic matching layer 6 have similar thermal expansion coefficients, and are relatively easy to bond.

As described above, case 4 often includes metal, first acoustic matching layer 5 often includes resin, and the thermal expansion coefficients of case 4 and first acoustic matching layer 5 are generally greatly different. Furthermore, the resin included in first acoustic matching layer 5 is highly likely to be PEEK or the like having poor adhesion, and may be peeled off from adhesive 3 on the interface.

Therefore, an element required for propagating ultrasonic waves from piezoelectric element 2 to a gas with high efficiency is to securely bond adhesive 3 and first acoustic matching layer 5.

In the present exemplary embodiment, voids 8 having a wedge shape or truncated cone shape and having the smallest sectional area near openings 8a are provided, and the adhesive cured inside voids 8 cannot pass through openings 8a. Thus, a strong anchor effect is obtained, which strengthens the bonding of adhesive 3 and first acoustic matching layer 5. As a result, adhesive 3 and first acoustic matching layer 5 are not easily peeled off from each other even if the shearing force due to the difference in thermal expansion coefficients acts between adhesive 3 and first acoustic matching layer 5.

This configuration makes it possible to obtain excellent bonding from piezoelectric element 2 to the second acoustic matching layer and to provide an ultrasonic sensor having excellent durability against environment such as thermal shock.

In the present exemplary embodiment, a shape of voids 8 is a wedge shape or truncated cone shape. However, needless to say, voids 8 only have to partially have a sectional area larger than an opening sectional area of openings 8a.

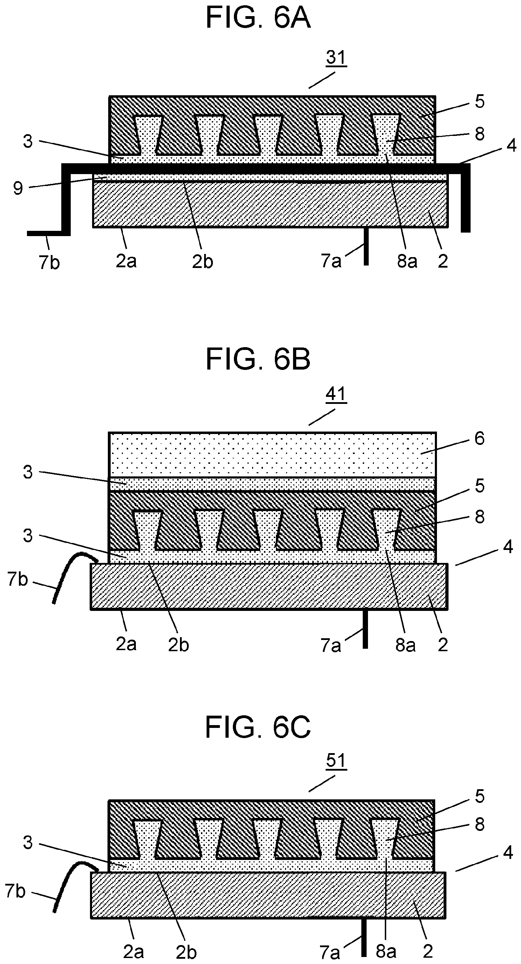

In the above exemplary embodiment, ultrasonic sensor 1 has case 4 and second acoustic matching layer 6. However, a configuration such as ultrasonic sensor 31 shown in FIG. 6A in which the second acoustic matching layer is not used, a configuration such as ultrasonic sensor 41 shown in FIG. 6B in which the case is not used, or a configuration such as ultrasonic sensor 51 shown in FIG. 6C in which neither the case nor the second acoustic matching layer is used can be implemented in various aspects without departing from the gist of the present disclosure.

(Second exemplary embodiment)

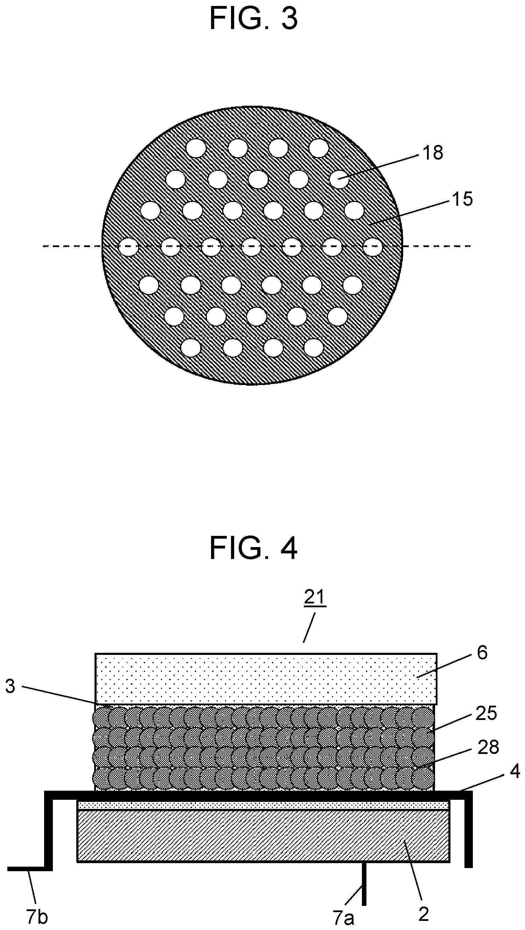

FIG. 2 is a schematic sectional view of an ultrasonic sensor in a second exemplary embodiment. FIG. 3 is a top view of a first acoustic matching layer shown in FIG. 2, and a broken line shown in FIG. 3 indicates a position of the section in FIG. 2.

In FIG. 2, ultrasonic sensor 11 includes piezoelectric element 2, adhesive 3, case 4, first acoustic matching layer 15, second acoustic matching layer 6, and electrodes 7a, 7b. In a basic configuration of these components, components denoted by the same reference marks as those in the first exemplary embodiment have the same configurations as components in the first exemplary embodiment, and the description thereof will be omitted. A difference between ultrasonic sensor 11 according to the present exemplary embodiment and ultrasonic sensor 1 according to the first exemplary embodiment is a structure of first acoustic matching layer 15.

In FIG. 3, each of voids 18 in first acoustic matching layer 15 has a cylindrical shape, and is manufactured as a through-hole penetrating from the surface facing case 4 to the surface facing second acoustic matching layer 6 by injecting and molding a resin.

In the present exemplary embodiment, liquid adhesive 3 is filled in voids 18 in advance, and case 4, first acoustic matching layer 15, and second acoustic matching layer 6 are superposed while adhesive 3 is wet. Then, adhesive 3 is solidified to bond case 4, first acoustic matching layer 15, and second acoustic matching layer 6.

In the present exemplary embodiment, the adhesive on both sides of first acoustic matching layer 15 is joined via adhesive 3 filled in the through-holes as voids 18, and thus a strong anchoring effect is obtained, which strengthens bonding of adhesive 3 and first acoustic matching layer 15.

As a result, in the present exemplary embodiment, a defect can be avoided even if the shearing force due to the difference in thermal expansion coefficients acts between adhesive 3 and first acoustic matching layer 15.

This configuration makes it possible to obtain excellent bonding from piezoelectric element 2 to second acoustic matching layer 6 and to provide an ultrasonic sensor having excellent durability against environment such as thermal shock.

The above density makes it possible to easily establish equation (1) for piezoelectric element 2 and second acoustic matching layer 6, and to provide an ultrasonic sensor having excellent characteristics.

Voids 18 (through-holes) in first acoustic matching layer 15 may be manufactured by injecting and molding a resin, or the through-holes may be formed by machining a metal disc.

(Third exemplary embodiment)

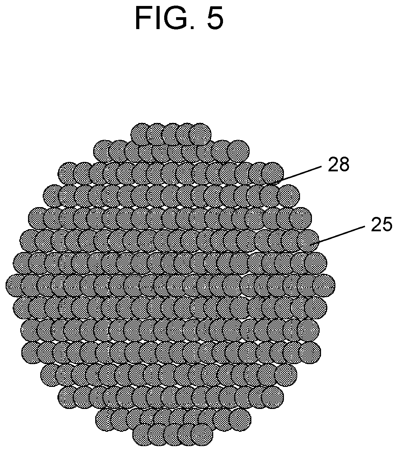

FIG. 4 is a schematic sectional view of an ultrasonic sensor according to a third exemplary embodiment, and FIG. 5 is a top view of a first acoustic matching layer shown in FIG. 4.

In FIG. 4, ultrasonic sensor 21 includes piezoelectric element 2, adhesive 3, case 4, first acoustic matching layer 25, second acoustic matching layer 6, and electrodes 7a, 7b. In a basic configuration of these components, components denoted by the same reference marks as those in the first exemplary embodiment have the same configurations, and the description thereof will be omitted. A difference between ultrasonic sensor 21 according to the present exemplary embodiment and ultrasonic sensor 1 according to the first exemplary embodiment is a structure of first acoustic matching layer 25.

In FIG. 4, first acoustic matching layer 25 is made porous by pressing and molding resin powders while heating.

When the powders are, for example, substantially spherical and uniform in size, and are disposed as in closest packing, a space not filled with the powders corresponds to voids 28 in first acoustic matching layer 25.

In this case, openings of voids 28 are formed from the powders disposed near an outermost surface, and voids 28 obviously have a part having an area equal to or larger than that of the opening at least one place.

While liquid adhesive 3 is filled in voids 28 having such characteristics, case 3, first acoustic matching layer 25, and second acoustic matching layer 6 are superposed, and adhesive 3 that has wet and spread is solidified to achieve strong bonding and provide an ultrasonic sensor having excellent reliability.

As a method of preparing voids 28 (porous) in first acoustic matching layer 25, metal powders can be pressurized and molded while heating.

(Examples)

Hereinafter, the present disclosure will be described in more detail with reference to examples.

In the examples, as a method of comparing adhesive strength of the first acoustic matching layer of the ultrasonic sensor, a change in sensor characteristics before and after 100 thermal shocks at temperatures of -40°C and 80°C was used as an index.

As an evaluation index of the characteristics of the ultrasonic sensor, a reference ultrasonic sensor was installed at a position 100 mm apart from the ultrasonic sensor to be evaluated in each example. The ultrasonic waves emitted from the ultrasonic sensor to be evaluated in each example propagated to the reference sensor, and electromotive force generated in the reference sensor was used.

In the reference sensor, disc-shaped lead zirconate titanate having a thickness of 3.8 mm and a diameter of 10 mm was used as a piezoelectric element, and steel use stainless 304 (SUS304) having a thickness of 0.2 mm was used as a case. Further, only one acoustic matching layer was provided, and glass balloons were added to epoxy resin to have a density of 0.5 g/cm$^3$ and then have a thickness of 1.2 mm and a diameter of 10 mm.

As described above, the characteristics of the ultrasonic sensor used in each example can be recognized by the electromotive force generated from the reference ultrasonic sensor.

The ultrasonic sensor has excellent adhesive strength when the electromotive force after a thermal shock test is divided by the electromotive force before the thermal shock test, and an obtained value (sensitivity retention) is large.

(First example)

The second exemplary embodiment shown in FIG. 2 was evaluated as follows.

As piezoelectric element 2, disk-shaped lead zirconate titanate having a thickness of 3.8 mm and a diameter of 10 mm was used. As adhesive 3, an epoxy adhesive that is liquid at room temperature and solidifies by heating was used. Case 4 including SUS304 having a thickness of 0.2 mm was used.

First acoustic matching layer 15 including PEEK resin having a thickness of 1 mm and a diameter of 10 mm was used. Through-holes having a diameter of 300 pm at the openings on the surface facing case 4 and having a diameter of 400 pm at the openings on the surface facing second acoustic matching layer 6 were molded as voids 8. A distance between the holes was 100 pm on a side where the diameter of the openings was 400 pm.

As second acoustic matching layer 6, a polymethacrylimide resin foamed into a molded product of closed cells, having density of 0.07 g/cm$^3$, and processed into a disk shape having a thickness of 0.8 mm and a diameter of 10 mm was used.

Ultrasonic sensor 11 was assembled as follows. First, first acoustic matching layer 15 was immersed in adhesive 3 at room temperature, case 4, first acoustic matching layer 15, and second acoustic matching layer 6 were disposed in order from below, and a load of 100 g was applied from above second acoustic matching layer 6. In this state, adhesive 3 wet and spread between first acoustic matching layer 15 and case 4 and between first acoustic matching layer 15 and second acoustic matching layer 6.

Then, by heating at 150°C for 60 minutes, adhesive 3 was solidified and case 4 through second acoustic matching layer 6 was bonded. Further, case 4 and piezoelectric element 2 were bonded by conductive adhesive, case 4 and electrode 7b were bonded by solder, and piezoelectric element 2 and electrode 7a were bonded by solder.

The electromotive force of the ultrasonic sensor manufactured as described above was 100 mV, and the electromotive force of the ultrasonic sensor after the thermal shock test was 98 mV. Therefore, the sensitivity retention of the ultrasonic sensor was 98%.

(Second example)

The second exemplary embodiment shown in FIG. 2 was evaluated as follows.

As piezoelectric element 2, disk-shaped lead zirconate titanate having a thickness of 3.8 mm and a diameter of 10 mm was used. As adhesive 3, an epoxy adhesive that is liquid at room temperature and solidifies by heating was used. Case 4 including SUS304 having a thickness of 0.2 mm was used.

First acoustic matching layer 15 including PEEK resin having a thickness of 1 mm and a diameter of 10 mm was used, and through-holes as voids 18 each having a diameter of 300 pm was molded. A distance between the holes was 100 pm.

As second acoustic matching layer 6, a polymethacrylimide resin foamed into a molded product of closed cells, having density of 0.07 g/cm$^3$, and processed into a disk shape having a thickness of 0.8 mm and a diameter of 10 mm was used.

Ultrasonic sensor 11 was assembled as follows. First, first acoustic matching layer 15 was immersed in adhesive 3 at room temperature, case 4, first acoustic matching layer 15, and second acoustic matching layer 6 were disposed in order from below, and a load of 100 g was applied from above second acoustic matching layer 6. In this state, adhesive 3 wet and spread between first acoustic matching layer 15 and case 4 and between first acoustic matching layer 15 and second acoustic matching layer 6.

Then, by heating at 150°C for 60 minutes, adhesive 3 was solidified and case 4 through the second acoustic matching layer was bonded. Further, case 4 and piezoelectric element 2 were bonded by conductive adhesive, case 4 and electrode 7b were bonded by solder, and piezoelectric element 2 and electrode 7a were bonded by solder.

The electromotive force of the ultrasonic sensor manufactured as described above was 100 mV, and the electromotive force of the ultrasonic sensor after the thermal shock test was 98 mV. Therefore, the sensitivity retention of the ultrasonic sensor was 98%.

Comparing with the first example has revealed that the characteristics and adhesive strength of the ultrasonic sensor were equivalent to those of the first example.

(Third example)

The second exemplary embodiment shown in FIG. 2 was evaluated as follows.

As piezoelectric element 2, disk-shaped lead zirconate titanate having a thickness of 2.8 mm and a diameter of 10 mm was used. As adhesive 3, an epoxy adhesive that is liquid at room temperature and solidifies by heating was used. Case 4 including SUS304 having a thickness of 0.2 mm was used.

First acoustic matching layer 15 including aluminum having a thickness of 1 mm and a diameter of 10 mm was used, and through-holes as voids 8 having a diameter of 2 mm were molded. A distance between the holes was 200 pm. As the second acoustic matching layer, a polymethacrylimide resin foamed into a molded product of closed cells, having a density of 0.07 g/cm$^3$, and processed into a disk shape having a thickness of 0.8 mm and a diameter of 10 mm was used.

Ultrasonic sensor 11 was assembled as follows. First, first acoustic matching layer 15 was immersed in adhesive 3 at room temperature, case 4, first acoustic matching layer 5, and second acoustic matching layer 6 were disposed in order from below, and a load of 100 g was applied from above second acoustic matching layer 6. In this state, adhesive 3 wet and spread between first acoustic matching layer 15 and case 4 and between first acoustic matching layer 15 and second acoustic matching layer 6.

Then, by heating at 150°C for 60 minutes, adhesive 3 was solidified and case 4 through the second acoustic matching layer was bonded. Further, case 4 and piezoelectric element 2 were bonded by conductive adhesive, case 4 and electrode 7a were bonded by solder, and piezoelectric element 2 and electrode 7b were bonded by solder.

The electromotive force of the ultrasonic sensor manufactured as described above was 95 mV, and the electromotive force of the ultrasonic sensor after the thermal shock test was 95 mV. Therefore, the sensitivity retention of the ultrasonic sensor was 100%.

The electromotive force of the ultrasonic sensor was a little smaller value than that in the second example, but was considered to be almost equivalent to the second example. As one possible cause, in the second example, the average density of the first acoustic matching layer was about 1.2 which was an average of the density of the PEEK resin having a density of 1.3 g/cm$^3$ and the epoxy resin having a density of 1.0 g/cm$^3$, while in the third example, the average density of the first acoustic matching layer was as large as about 1.6 g/cm$^3$.

On the other hand, the sensitivity retention ratio was 100%, which was further improved as compared with the second example. This can be inferred from a decrease in the shearing force in the thermal shock test because the difference in the thermal expansion coefficients between aluminum and the case including SUS304 is smaller than that between the PEEK resin and the case.

(Fourth example)

The third exemplary embodiment shown in FIG. 4 was evaluated as follows.

As piezoelectric element 2, disk-shaped lead zirconate titanate having a thickness of 2.8 mm and a diameter of 10 mm was used. As adhesive 3, an epoxy adhesive that is liquid at room temperature and solidifies by heating was used. Case 4 including SUS304 having a thickness of 0.2 mm was used.

As first acoustic matching layer 25, PEEK resin was crushed and powders having an average particle size of 100 pm were heated to be molded into a thickness of 1 mm and a diameter of 10 mm.

Ultrasonic sensor 21 was assembled as follows. First, first acoustic matching layer 25 was immersed in adhesive 3 at room temperature, case 4, first acoustic matching layer 25, and second acoustic matching layer 6 were disposed in order from below, and a load of 100 g was applied from above second acoustic matching layer 6. In this state, adhesive 3 wet and spread between first acoustic matching layer 25 and case 4 and between first acoustic matching layer 25 and second acoustic matching layer 6.

Then, by heating at 150°C for 60 minutes, adhesive 3 was solidified and case 4 through the second acoustic matching layer was bonded. Further, case 4 and piezoelectric element 2 were bonded by conductive adhesive, case 4 and electrode 7a were bonded by solder, and piezoelectric element 2 and electrode 7b were bonded by solder.

The electromotive force of the ultrasonic sensor manufactured as described above was 85 mV, and the electromotive force of the ultrasonic sensor after the thermal shock test was 85 mV. Therefore, the sensitivity retention of the ultrasonic sensor was 100%.

The electromotive force was slightly smaller than those in the first to third exemplary embodiments. A conceivable reason is that the first acoustic matching layer has a structure in which porous material including PEEK resin and the voids are filled with epoxy resin, and the acoustic impedance is similar when the ultrasonic waves propagate, but the ultrasonic waves repeatedly slightly reflect, which slightly reduces the efficiency.

On the other hand, the sensitivity retention is improved as compared with the second example. A conceivable reason is that in the second example, the PEEK resin as a part of the first acoustic matching layer faces the case and is slightly affected by the shearing force due to the thermal shock, but in the fourth example, the particulate PEEK resin faces the case in a point contact form, that is, the adhesive of which approximately entire surface includes epoxy resin faces the case.

(First comparative example)

In the first example, an ultrasonic sensor was manufactured by bonding the surface of openings 8a of voids 8 each having a diameter of 400 pm to face the case, and the ultrasonic sensor was evaluated.

The electromotive force of the ultrasonic sensor manufactured as described above was 100 mV, and the electromotive force of the ultrasonic sensor after the thermal shock test was 60 mV. Thus, the sensitivity retention of the ultrasonic sensor was 60%.

The electromotive force of the ultrasonic sensor after the manufacture was found to be equivalent to that in the first example. On the other hand, the sensitivity retention was found to be lower than that in the first example. A conceivable reason is that when linear elastic force generated in the case and the first acoustic matching layer is applied by the thermal shock test, a component of force in a direction perpendicular to a surface direction and away from the adhesive is generated in the adhesive in the voids in the first acoustic matching layer, and the first acoustic matching layer is likely to be peeled off.

(Second comparative example)

In the second example, an ultrasonic sensor was manufactured without providing through-holes, that is, voids in the first acoustic matching layer.

The electromotive force of the ultrasonic sensor manufactured as described above was 100 mV, and the electromotive force of the ultrasonic sensor after the thermal shock test was 20 mV. Thus, the sensitivity retention of the ultrasonic sensor was 20%.

In the ultrasonic sensor after the thermal shock test, the case and the acoustic matching layer were easily peeled off. Furthermore, almost all the adhesive remained on the case after peeling. This can be inferred from a deterioration of bonding on a PEEK resin interface because of the shearing force generated in the thermal shock test due to the thermal expansion coefficients of the case and the first matching layer.

As can be seen from the examples and comparative examples, when the acoustic matching layer is bonded to a material having a large difference in the thermal expansion coefficient, voids having a part of an area equivalent to or larger than that of the openings of the acoustic matching layer exist, and thus the ultrasonic sensor can be obtained that has excellent adhesive strength due to the anchor effect of the adhesive and can improve the environmental durability.

As described above, an ultrasonic sensor in a first disclosure includes a piezoelectric element, a first acoustic matching layer adhered to the piezoelectric element, and an adhesive that adheres the first acoustic matching layer to the piezoelectric element, in which the first acoustic matching layer has an opening on a surface adhered to the piezoelectric element and a void that communicates with the opening, and the adhesive is filled in the void.

With this configuration, the ultrasonic sensor in the first disclosure can obtain an anchor effect and excellent durability by integrating the adhesive that adheres the piezoelectric element and the first acoustic matching layer and the adhesive that solidifies in the void.

Sufficient bonding strength needs to be secured in order to propagate ultrasonic waves from the piezoelectric element to the first acoustic matching layer with high efficiency.

When the first acoustic matching layer is a single layer, the ultrasonic waves need to be propagated from the piezoelectric element to a gas with high efficiency. When there is a plurality of acoustic matching layers such as the first acoustic matching layer and the second acoustic matching layer, the ultrasonic waves need to be propagated from the first acoustic matching layer to the second acoustic matching layer and from the second acoustic matching layer to the gas with high efficiency.

Then, as a characteristic required for the first acoustic matching layer, in addition to an acoustic impedance characteristic represented by equation (1), it is necessary to suppress an energy loss due to a deformation of the first acoustic matching layer (high propagation characteristics). In general, a substance with high propagation characteristics is hard (high elasticity). Further, a substance satisfying equation (1) and having high elasticity is a super engineering plastic such as PEEK in most cases.

However, in general, super engineering plastics have a characteristic of poor adhesion. Thus, the first acoustic matching layer has the opening facing the piezoelectric element or a member bonded to the piezoelectric element, and the adhesive that is cured after filling the void is bonded to the acoustic matching layer by chemical bonding and a mechanical bonding, that is, the anchor effect. As a result, even if the adhesion is poor (bonding by a chemical bond is weak), strong bonding is secured. On the other hand, a facing surface of the adhesive is relatively easily bonded to ceramics or metals.

As described above, the piezoelectric element and the first acoustic matching layer, which are firmly bonded, are not easily peeled off even when stress due to a difference in the thermal expansion coefficient occurs, and the ultrasonic sensor having excellent durability can be provided.

The ultrasonic sensor in a second disclosure includes a metal member having a flat plate, a piezoelectric element bonded to a first surface of the flat plate, and a first acoustic matching layer adhered to a second surface of the flat plate, and an adhesive that adheres the first acoustic matching layer to the flat plate. The first acoustic matching layer has an opening on a surface adhered to the flat plate, and a void that communicates with the opening, and the adhesive is filled in the void.

With this configuration, the ultrasonic sensor in the second disclosure can obtain an anchor effect and excellent durability by integrating the adhesive that adheres the piezoelectric element bonded to the flat plate and the first acoustic matching layer and the adhesive that solidifies in the void.

In an ultrasonic sensor according to a third disclosure, in the first or second disclosure, an area of the opening on the surface may be smaller than or equal to a sectional area of the void.

With this configuration, a larger anchor effect can be obtained.

An ultrasonic sensor in a fourth disclosure, in any one of the first to third disclosures, may include a second acoustic matching layer adhered to the first acoustic matching layer with the adhesive, in which the void has an opening that communicates with the second acoustic matching layer.

In an ultrasonic sensor according to a fifth disclosure, in any one of the first to fourth disclosures, the first acoustic matching layer may be at least partially resin.

A substance having a void that is filled with a liquid adhesive and solidified has density that is average density of the substance obtained from an existence ratio.

On the other hand, in a case where the acoustic matching layer includes two layers of the first acoustic matching layer facing the piezoelectric element and the second acoustic matching layer laminated on the first acoustic matching layer, when the density of the second acoustic matching layer is about 0.05 g/cm$^3$, the density of the first acoustic matching layer (the acoustic impedance is highly dependent on the density because an acoustic velocity is less dependent on resin) is about 1 g/cm$^3$ in accordance with equation (1). This density corresponds to density of general resins. Further, density of the adhesive such as epoxy adhesive is about 1 g/cm$^3$. Thus, in the acoustic matching layer including a resin, the average density when the void is filled with an adhesive having density of about 1 g/cm$^3$ is also about 1 g/cm$^3$.

Therefore, the acoustic matching layer including a resin makes it possible to provide the ultrasonic sensor having excellent characteristics.

In an ultrasonic sensor according to a sixth disclosure, in any one of the first to fourth disclosures, the first acoustic matching layer may be at least partially an inorganic substance or a metal.

Because inorganic substances and metals have high heat resistance, an ultrasonic sensor having excellent heat resistance can be provided by using a brazing material or the like including an alloy as an adhesive.

In an ultrasonic sensor in a seventh disclosure, in any one of the first to sixth disclosures, the void may at least partially have a substantially cylindrical shape.

From a viewpoint of industrial productivity, the acoustic matching layer partially having a substantially cylindrical shape is suitable for production. For example, as a substantially cylindrical shape, the through-hole between the surface of the acoustic matching layer facing the piezoelectric element or the member bonded to the piezoelectric element and the surface not facing the piezoelectric element or the member corresponds to this void. Such a shape can be produced, for example, by injection molding or by forming a through-hole in a plate-shaped member by machining when the acoustic matching layer is a thermoplastic resin. On the other hand, when the acoustic matching layer includes metal, the through-hole can be formed by die casting or by machining a plate-shaped member.

Further, in a state where the void is filled with the adhesive and solidified, the stress due to the difference in the thermal expansion coefficients between the acoustic matching layer and the piezoelectric element or the member bonded to the piezoelectric element is applied schematically perpendicularly to the adhesive in the void. Thus, the effect of suppressing a defect occurring at these interfaces is sufficient.

In an ultrasonic sensor in an eighth disclosure, in any one of the first to sixth disclosures, the void may be at least partially obtained by molding powder.

In general, a member obtained by molding powder has the void having a larger area than that of the opening. Further, there are a wide variety of substances that can be molded in this way, such as inorganic substances, metals, and resins. Therefore, the acoustic matching layer having appropriate physical properties such as density, an elastic modulus, and heat resistant temperature can be formed, and an ultrasonic sensor having excellent characteristics can be provided.

In an ultrasonic sensor in a ninth disclosure, in any one of the first to eighth disclosures, the adhesive may have average density during curing of equal to or more than 0.8 $g/cm^3$ and less than or equal to 1.5 $g/cm^3$.

When the acoustic matching layer includes two layers, and the density of the second acoustic matching layer is about 0.05 $g/cm^3$, the density of the first acoustic matching layer (the acoustic impedance is highly dependent on the density because an acoustic velocity is less dependent on resin) is about 1 $g/cm^3$ in accordance with equation (1). This density corresponds to density of general resins. Further, density of the adhesive such as epoxy adhesive is about 1 $g/cm^3$. Thus, in the acoustic matching layer including a resin, the average density when the void is filled with an adhesive having density of about 1 $g/cm^3$ is also about 1 $g/cm^3$. Furthermore, density of the first acoustic matching layer at which a maximum efficiency as an ultrasonic sensor can be obtained is different between a case where the density of the second acoustic matching layer is more than 0.05 $g/cm^3$ and a case where the density of the second acoustic matching layer is less than 0.05 $g/cm^3$. The density of the first acoustic matching layer being approximately equal to or more than about 0.8 $g/cm^3$ and less than or equal to about 1.5 $g/cm^3$ is optimal.

In an ultrasonic sensor in a tenth disclosure, in any one of the first to ninth disclosures, the adhesive may be filled in the void in a liquid state and then cured to bond.

As an example, when an excess amount of adhesive compared to a total volume of the void is coated to fill the void of the acoustic matching layer with liquid adhesive, the liquid adhesive corresponding to at least a difference between the coating amount and the total volume of the void is left on the surface of the acoustic matching layer. When the acoustic matching layer is brought into contact with the piezoelectric element or the member bonded to the piezoelectric element in such a state, the liquid adhesive wets and spreads on the interface.

In general, the piezoelectric element or the member bonded to the piezoelectric element, which includes an inorganic substance or metal, is relatively easily bonded. Therefore, when solidified, the liquid adhesive is bonded to the piezoelectric element or the member bonded to the piezoelectric element by bonding force that is mainly a chemical bond, and the liquid adhesive is bonded to the acoustic matching layer by bonding force that is mainly an anchor effect. Due to a series of these effects, the piezoelectric element or the member bonded to the piezoelectric element and the acoustic matching layer are firmly bonded, and an ultrasonic sensor having excellent reliability can be provided.

INDUSTRIAL APPLICABILITY

As described above, the ultrasonic sensor of the present invention is suitable for use in flow rate meters for measuring various fluids. In particular, the ultrasonic sensor of the present invention is preferably used in applications where use environment requires high durability in higher temperature or lower temperature environment than room temperature.

REFERENCE MARKS IN THE DRAWINGS

| | |
|---|---|
| 1, 11, 21, 31, 41, 51 | ultrasonic sensor |
| 2 | piezoelectric element |
| 3 | adhesive |

| 4 | case (metal member) |
| 4a | top surface (flat plate) |
| 5, 15, 25 | first acoustic matching layer |
| 6 | second acoustic matching layer |
| 8, 18, 28 | void |

**Claims**

1. An ultrasonic sensor comprising:

   a piezoelectric element;
   a first acoustic matching layer adhered to the piezoelectric element; and
   an adhesive that adheres the first acoustic matching layer to the piezoelectric element, wherein
   the first acoustic matching layer has an opening on a surface adhered to the piezoelectric element, and a void
   that communicates with the opening, and
   the adhesive is filled in the void.

2. An ultrasonic sensor comprising:

   a metal member having a flat plate;
   a piezoelectric element bonded to a first surface of the flat plate;
   a first acoustic matching layer adhered to a second surface of the flat plate; and
   an adhesive that adheres the first acoustic matching layer to the flat plate, wherein
   the first acoustic matching layer has an opening on a surface adhered to the flat plate, and a void that communicates with the opening, and
   the adhesive is filled in the void.

3. The ultrasonic sensor according to claim 1 or 2, wherein an area of the opening on the surface is smaller than or equal to a sectional area of the void.

4. The ultrasonic sensor according to any one of claims 1 to 3, further comprising a second acoustic matching layer adhered to the first acoustic matching layer with the adhesive,
   wherein the void has an opening that communicates with the second acoustic matching layer.

5. The ultrasonic sensor according to any one of claims 1 to 4, wherein the first acoustic matching layer is at least partially resin.

6. The ultrasonic sensor according to any one of claims 1 to 4, wherein the first acoustic matching layer is at least partially an inorganic substance or a metal.

7. The ultrasonic sensor according to any one of claims 1 to 6, wherein the void at least partially has a substantially cylindrical shape.

8. The ultrasonic sensor according to any one of claims 1 to 6, wherein the void is at least partially obtained by molding powder.

9. The ultrasonic sensor according to any one of claims 1 to 8, wherein the adhesive has average density during curing of equal to or more than 0.8 $g/cm^3$ and less than or equal to 1.5 $g/cm^3$.

10. The ultrasonic sensor according to any one of claims 1 to 9, wherein the adhesive is filled in the void in a liquid state and then cured to bond.

# FIG. 1

# FIG. 2

# FIG. 3

# FIG. 4

# FIG. 5

28

25

# FIG. 6A

# FIG. 6B

# FIG. 6C

## INTERNATIONAL SEARCH REPORT

| | International application No. |
|---|---|
| | PCT/JP2019/023823 |

**A. CLASSIFICATION OF SUBJECT MATTER**
Int.Cl. H04R17/00(2006.01)i

According to International Patent Classification (IPC) or to both national classification and IPC

**B. FIELDS SEARCHED**

Minimum documentation searched (classification system followed by classification symbols)
Int.Cl. H04R1/00, H04R1/02, H04R17/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-325297 A (MATSUSHITA ELECTRIC INDUSTRIAL CO., LTD.) 08 November 2002, paragraphs [0023]–[0039], fig. 1-3 (Family: none) | 2, 3, 6, 8-10<br>1, 4, 5, 7 |
| Y | JP 60-235600 A (SHIMADZU CORPORATION) 22 November 1985, page 2, upper right column, line 16 to lower left column, line 9, fig. 1 (Family: none) | 1 |
| Y | JP 2004-343263 A (MATSUSHITA ELECTRIC INDUSTRIAL CO., LTD.) 02 December 2004, paragraphs [0013]–[0016], fig. 1, 2 (Family: none) | 4, 5, 7 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 July 2019 (19.07.2019) | 30 July 2019 (30.07.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4701059 B

- JP 3488102 B